# EUROPÄISCHE PATENTANMELDUNG

(11) **EP 3 141 658 A1**
(43) Veröffentlichungstag der Anmeldung: **15.03.2017**
(21) Anmeldenummer: 16187669.3
(22) Anmeldetag: 07.09.2016
(51) Int. Cl.: E01C 5/00, C04B 26/28

(54) **VERFAHREN ZUR SICHERSTELLUNG EINER SIEBLINIE EINES PSYLLIUMHALTIGEN WEGEDECKENMATERIALS**

(30) Priorität: 08.09.2015 DE 102015217147
(71) Anmelder: eco science GmbH, 18182 Bentwisch (DE)
(72) Erfinder: Fritsche, Sven, 18109 Rostock (DE)
(74) Vertreter: Eisenführ Speiser

(57) **Zusammenfassung**

Die Erfindung betrifft ein Verfahren zur Sicherstellung einer Sieblinie eines psylliumhaltigen Wegedeckenmaterials, umfassend die Schritte:
a) Bereitstellen einer Gesteinskörnung mit definierter Sieblinie,
b) Bereitstellen von Psylliumpulver,
c) Vermischen der Gesteinskörnung mit dem Psylliumpulver, so dass eine homogene Mischung entsteht, und
d) Abfüllen der homogenen Mischung in Gebinde mit einem Inhalt von ≤ 75 kg, bevorzugt ≤ 50 kg, weiter bevorzugt ≤ 40 kg, besonders bevorzugt ≤ 30 kg.

## Beschreibung

Die Erfindung betrifft ein Verfahren zur Sicherstellung einer Sieblinie eines psylliumhaltigen Wegedeckenmaterials, die Verwendung von bestimmten Gebinden zur Sicherstellung einer Sieblinie eines psylliumhaltigen Wegedeckenmaterials sowie ein gefülltes Gewinde, hergestellt oder herstellbar mittels des erfindungsgemäßen Verfahrens.

Wegedecken, die wenigstens teilweise wasserdurchlässig sind, stellen eine ungebundene oder nur teilgebundene Bauweise für Straßen, Wege, Plätze und Freiflächen (Freiraumflächen) dar. Wasserdurchlässige Wegedecken werden häufig aus kornabgestuften natürlichen Gesteinskörnungen hergestellt, wie zum Beispiel Kies, Sand, Splitt- oder Brechsandgemischen. Die Gesteinskörnungen werden dabei weder von hydraulischen noch bituminösen Bindemitteln zusammengehalten. Wasserdurchlässige Wegedecken sind eine ökologisch sinnvolle und kostengünstige Alternative zu versiegelnden Bauweisen, sie werden überwiegend in der Lieferkörnung 0-8 mm hergestellt, aber auch andere Lieferkörnungen sind möglich. Eine Gesteinskörnung ist körniges Steinmaterial, das natürlich, industriell hergestellt oder recycelt sein kann.

Wasserdurchlässige Wegedecken sind gegenüber mit hydraulischen oder bituminösen Bindemitteln gebundenen Wegedecken anfälliger für Erosion. Besonders in Gefällestrecken wird bei starken Regenfällen die oberste Schicht in der wasserdurchlässigen Wegedecke leichter abgetragen. Es entstehen dadurch Ausspülungen, Rinnen und Schlaglöcher. Eine Instandhaltung der entsprechenden Flächen ist daher laufend erforderlich. Eine stärkere Nutzung von durchlässigen Wegedecken erzeugt bei Trockenheit Staubentwicklung und einen durch Verwehen bedingten Verschleiß der obersten Deckschicht.

Wasserdurchlässige Wegedecken werden häufig durch ein ledigliches Verdichten der entsprechenden Deckmaterialien erzeugt.

Es ist wünschenswert, auch für (teil-)wasserdurchlässige Wegedecken eine Bindung vorzusehen, die über eine bloße Verdichtung hinausgeht. Aus dem Stand der Technik (WO 2013/117684) ist es bekannt, Psyllium als Bindematerial für die Bindung von Gesteinskörnungen zu verwenden. Psyllium besitzt den Vorteil, dass es ein natürliches Bindemittel ist und die Bindung von wasserdurchlässigen Wegedecken deutlich verbessert und so die wesentlichen Nachteile von wasserdurchlässigen Wegedecken gegenüber dauerhaft gebundenen, aber flächenversiegelden Bauweisen auf hydraulischer oder bituminöser Basis zu beseitigen.

Psyllium hat die bekannte Eigenschaft mit dem Feinkorn von kornabgestuften Gesteinskörnungen feste Verbindungen einzugehen und ein stabiles Korngefüge zu erzeugen. Mit Psyllium stabilisierte Freiraumflächen sind wesentlich robuster gegenüber Erosion und geringer staubend als lediglich wassergebundene oder verdichtete Wegedecken. Mit Psyllium stabilisierte Freiraumflächen halten deshalb auch bei Gefälleanwendungen den Ausspülungen durch Regen deutlich besser stand. Psyllium zur Stabilisierung von Wegedecken wird unter anderem von den Firmen Stabilizer (Schweiz) unter dem Handelsnamen Stabilizer und von den Firmen consagros (Deutschland) unter dem Namen Natur-Stab als Bindemittel für die Stabilisierung von Wegedecken vertrieben.

Um die optimale Bindung von Psyllium an die Feinanteile der Gesteinskörnung zu ermöglichen, ist eine definierte Kornabstufung und Begrenzung der Minimum und Maximum Anteile der Körnungslinie (Sieblinie) erforderlich. Die vorgenannten Hersteller geben diese definierte Körnungslinie exakt vor und weisen auf die zwingende Einhaltung hin.

Nur bei strikter Einhaltung der Körnungslinie ist einen Vermischung mit Psyllium zur Herstellung einer Wegedecke dauerhaft erfolgversprechend, wobei die Realisierung der notwendigen Gewichtung des Psyllium-Gesteinskörnungsverhältnisses davon unabhängig ungelöst bleibt.

Im bisherigen Stand der Technik werden psylliumhaltige Mischungen von Wegedeckenmaterial als erdfeuchte Mischung von den genannten Herstellern vorgeschlagen. Dies hat den Nachteil, dass Zugabewasser, Psyllium und die Gesteinskörnung mit einer Eigenfeuchte miteinander vermischt werden. Durch die Eigenschaft des Psylliums, schnell eine erhebliche Menge an Wasser aufzunehmen, entstehen während des Mischvorgangs schon durch den Kontakt mit Erdfeuchte, beziehungsweise eigenfeuchte Gesteinskörnung (mit einem Restwassergehalt von 3 bis 5 Gewichtsprozent) Verklumpung der Gesteinskörnung mit dem Psyllium, wodurch bereits die Sieblinie gestört wird. Erschwerend kommt dazu, dass häufig die Sollsieblinie für wasserdurchlässige Wegedecken einen hohen Anteil von Feinanteilen (bis zu 20 Gewichtsprozent) aufweist. Diese Feinanteile werden als "bindige" Bestandteile bezeichnet und neigen bei Wasserzugabe ebenfalls zur Verklumpung.

Hinzu kommt, dass bei der sogenannten *"in situ"* - Mischung, also beim Mischen kurz vor dem Einbau am Einbauort die Dosierung des pulverförmigen Psylliums höchst ungenau ist: Aufgrund der offenen Bauweise von mobilen Mischanlagen besteht bereits das Risiko, dass ein Teil des zuzudosierenden Psylliums aufgrund von Wind nicht in die Mischung gelangt. Außerdem ist es nur sehr schwierig, mittels einer Waage die Zugabemenge aus einem Sack in einen offenen Mischer exakt genug auszuführen. Ferner besteht weiterhin das Risiko, dass die genannten Feinstanteile der Gesteinskörnung verwehen.

Besonders die zu erwartenden Ungenauigkeiten bei der Dosierung des Pylliums in offenen Mischanlagen wie zum Beispiel Trommelmischanlagen und die Verluste der Feinanteile der Gesteinskörnung beim Befüllen des Mischers sind von Bedeutung, da im Regelfall Psyllium nur einen geringen Anteil am Gesamtgewicht des Wegedeckenmaterials besitzt und insbesondere die Feinanteile wichtig für einen Bindungserfolg sind.

Als weiteres wesentliches Problem kommt hinzu, dass vor der *"in situ"* - Mischung für die eingesetzte Gesteinskörnung im Regelfall das Einhalten der Sieblinie über das gesamte Material (homogene Verteilung der verschiedenen Körnungsgrößen) nicht gewährleistet ist:
Die für die Zwangsmischung in mobilen Mischanlagen benötigten Gesteinskörnungen entstammen in der Regel Haufwerken, die durch verschiedene Transporte und Verladungen in Steinbrüchen und Kieswerken zu Lagerhalden aufgesetzt werden. Alle Haufwerke von Gesteinskörnungen sind mindestens erdfeucht, sie neigen zu Entmischung, die groben Bestandteile der Gesteinskörnung finden sich im unteren Teil des Schüttkegels des Haufwerks wieder. Die feinen Bestandteile bilden den oberen Bereich des Kegels des Haufwerks. Diese Entmischung durch Gravitation ist zwangsläufig und unvermeidbar.

Durch die Lagerung der Haufwerke im Freien auf Halden werden diese zwangläufig einer freien Bewitterung und Erosion ausgesetzt, so dass bei Bestellung eines Kunden für z.B einer Lieferung von Gesteinskörnung für die Produktion von Wegedecken nach Sollsieblinie, ein wirkliches Erreichen aus vorgenannten Gründen praktisch nicht möglich ist.

Die Lieferung der Gesteinskörnung zum Kunden erfolgt dann bei größeren Mengen per LKW als lose Schüttung in Partien bis 25 t Menge, für kleine Mengen werden Lieferungen in einem Big Bag bevorzugt. Hier werden vorzugsweise Big Bag mit einem Inhalt von einer 1 t benutzt.

Durch die Lagerungsbedingungen und insbesondere die Transportbedingungen kommt es zwangsläufig zu einer Teilentmischung der verschiedenen Körnungsgrößen, so dass bei einer *"in situ*" -Mischung - wie sie im Stand der Technik üblich ist - regelmäßig die gesamte Lieferungsmenge in einen Mischprozess eingesetzt werden müsste, um den Entmischungseffekt auszugleichen. Dies ist aber wirklichkeitsfremd. Diese Problematik würde auch dann gelten, wenn eine Mischung geliefert werden würde, in der Psyllium bereits voreingemischt ist, da die transportbedingten oder lagerbedingten Entmischungseffekte - unabhängig von der beschriebenen Feuchtigkeitsproblematik - auch bei Anwesenheit von Psyllium eintreten würden.

Dementsprechend ist im Stand der Technik insbesondere für psylliumhaltige Wegematerialien bislang keine sichere und praktikable Möglichkeit bekannt, eine exakte Sieblinie gleichbleibend und kontinuierlich für die benötigte Menge an Wegedeckenmaterial zu gewährleisten und gleichzeitig die benötigte Menge an Psyllium in diesem Material exakt zu verteilen.

Die im Stand der Technik entsprechend vorgeschlagene und angewendete Vermischung in mobilen Mischanlagen (zum Beispiel Betonmischer, Mischschaufeln, etc.) insbesondere unter Verwendung von erdfeuchter Gesteinskörnung aus Haufwerken und unter der Zugabe von Psyllium und Wasser während des Mischprozesses ist aus den oben beschriebenen Gründen unzureichend und zu ungenau. Die Einhaltung der exakten Sieblinie wird dadurch nicht gewährleistet. Das Verfahren ist zudem nicht anwenderfreundlich, da das einzusetzende Psyllium in Pulverform im Regelfall stark staubt und daher für den Anwender aus gesundheitlichen Gründen Schutzmaßnahmen zumindest wünschenswert sind. Übliche Sicherheitshinweise für psylliumhaltige Materialien sind die Warnung vor Einatmung und vor Hautkontakt.

Dementsprechend besteht ein Bedarf nach einem anwenderfreundlichen Verfahren zur stetigen Gewährleistung der Sieblinie, der genauen Dosierung des notwendigen Psylliumanteils und der homogenen Mischung der Anteile.

Aufgabe der Erfindung war es, diesem Bedarf zu entsprechen.

Diese Aufgabe wird gelöst durch ein Verfahren zur Sicherstellung einer Sieblinie eines psylliumhaltigen Wegedeckenmaterials, umfassend die Schritte:
a) Bereitstellen einer Gesteinskörnung mit definierter Sieblinie,
b) Bereitstellen von Psylliumpulver,
c) Vermischen der Gesteinskörnung mit dem Psylliumpulver, so dass eine homogene Mischung entsteht, und
d) Abfüllen der homogenen Mischung in Gebinde mit einem Inhalt von ≤ 75 kg, bevorzugt ≤ 50 kg, weiter bevorzugt ≤ 40 kg, besonders bevorzugt ≤ 30 kg.

Bevorzugt findet das erfindungsgemäße Verfahren in einem Baustoffmischwerk statt: Hier besteht die Möglichkeit, große Mischmengen zu verarbeiten, sodass die in Schritt a) geforderte Gesteinskörnung mit definierter Sieblinie gewährleistet werden kann. Insbesondere ist der Einsatz von großen Zwangsmischsystemen (mit ≥ 1 t Kapazität) erfindungsgemäß bevorzugt. Ferner muss die Möglichkeit bestehen, eine zeitnahe Abfüllung der erzeugten Mischung in Gebinde zu gewährleisten, da nur so eine unerwünschte Entmischung verhindert werden kann.

Bevorzugte Materialien für die erfindungsgemäße einzusetzende Gesteinskörnung sind feuergetrockneter Sand und Kies und Splitt, sowie jede Art von geeigneter natürlicher, künstlicher oder recycelter Gesteinskörnung oder deren Gemische. Besonders bevorzugt ist basisches Material für die Gesteinskörnung.

Der Gesteinskörnung können grundsätzlich weitere Zuschlagstoffe beigefügt werden wie z. B. Fasermaterial, insbesondere Fasern aus Kunststoffen, Kokos, Hanf, Schilf oder Stroh.

Psyllium im Sinne dieses Textes ist ein Pflanzenmaterial, das aus Wegerich *(Plantago),* Untergattung Psyllium gewonnen wurde. Hierbei ist insbesondere Material aus der Epidermis und den angrenzenden Schichten (Samenschalen) des getrockneten reifen Samens der Pflanze zu verstehen. Bevorzugt handelt es sich um zerkleinertes, insbesondere vermahlenes Pflanzenmaterial. Besonders bevorzugt stammt Psyllium aus Plantago ovata (indischer Flohsamen). Ein solches bevorzugtes Material ist z.B. unter dem Handelsnamen Blond Psyllium bzw. Blond Psyllium Husk. (Schale) erhältlich.

Weitere Handelsnamen sind Indian Psyllium oder Isphagula. Der indische Flohsamen zeichnet sich gegenüber Flohsamen anderer Herkunft (z.B. Spanien, Frankreich dort Plantago afra) durch sein hohes Quellvermögen aus, also die Fähigkeit Wasser aufzunehmen und zu binden. In der Epidermis der europäischen Flohsamenarten sind ca. 10-12% Schleimstoffe (insbesondere Arabinoxylane) mit einer Quellzahl von mindestens 10 enthalten. Die Samenschalen des indischen Flohsamens enthalten ca. 20-30% Schleimstoffe. Im Samen selbst können Öl, Zellulose, Proteine sowie Iridoglykoside (u.a. Aucubin) vorkommen. Die indischen Flohsamenschalen bestehen aus der äußersten schleimhaltigen Schicht der Samenschale, d.h. der Schalenepidermis, und den darunter liegenden Schichten der Samenschale.

Ganz besonders bevorzugt ist Psyllium im Sinne dieser Anmeldung gemahlenes Pulver aus der Samenschale des indischen Flohsamens mit einer Quellzahl von ≥ 10, bevorzugt ≥ 40, weiter bevorzugt ≥ 60, insbesondere 60-90.

Grundsätzlich sind auch alle anderen Flohsamenarten aus Ländern nicht vorgenannter Herkunft geeignet.

Unter Psyllium im Sinne dieses Textes fällt jedoch auch geriebenes (vermahlenes) Material der entsprechenden Pflanzen aus dem gesamten Samen. Psyllium ist entsprechend dem vorher Beschriebenen ein organisches Bindemittel mit schleimbildenden Eigenschaften. Bei Kontakt mit Wasser bildet Psyllium ein schleimartiges Gel, das im Wesentlichen die Partikel der zu bindenden Materialien aneinander bindet. Dies wird vorzugsweise dadurch erreicht, dass man das Gemisch nach Kontakt mit Wasser eine bestimmte Zeit lang fest werden lässt. Nach dem Trocknen wird Psyllium fest und bildet eine flexible und elastische Bindung unter und zwischen den zu bindenden Partikeln.

Bevorzugt wird insbesondere das ganz besonders bevorzugte Psyllium in einer Reinheit von 65 - 99 % und/oder eine Mahlfeinheit von 40 - 200 mesh eingesetzt.

Ein Gebinde im Sinne der vorliegenden Erfindung ist eine abgeschlossene Verpackungseinheit. Beispiele für Gebinde sind Papiersäcke, Kunststoffsäcke und Eimer.

Schon aus Praktikabilitätsgründen ist es bevorzugt, dass die erfindungsgemäßen Gebinde beziehungsweise die erfindungsgemäß einzusetzenden Gebinde wenigstens 5 kg, weiter bevorzugt wenigstens 10 kg des erfindungsgemäß einzusetzenden psylliumhaltigen Wegedeckenmaterials enthalten. Kleinere Mengen in den Gebinden sind natürlich auch möglich, sind aber aus Gründen des Verhältnisses zwischen Verpackungsmaterial zu Inhalt häufig nicht wünschenswert.

Bevorzugt verringern oder verhindern die erfindungsgemäß einzusetzenden Gebinde die Aufnahme von Feuchtigkeit durch die durch das erfindungsgemäße Verfahren erzeugte Mischung.

Überraschenderweise hat sich herausgestellt, dass durch die oben genannten Gebindegrößen eine ausreichende Sicherstellung der wichtigen Sieblinie für psylliumhaltige Wegedeckenmaterialien sicher gewährleistet werden kann. Dies gilt auch, wenn die Gebinde längeren Lagerprozessen unterworfen werden und/oder über weitere Strecken transportiert werden.

Hinzu kommt noch, dass der Einsatz von verhältnismäßig kleinen Gebindegrößen für Wegedecken für den Fachmann nicht naheliegend war, da hier im Regelfall große Materialmengen benötigt werden. Die auf den ersten Blick umständliche Handhabung kleinerer Gebinde, wie sie aufgrund des erfindungsgemäßen Verfahrens für die Erstellung von Wegedecken notwendig wird, wird aber aufgewogen durch die hohe Verarbeitungssicherheit sowie dem Entfallen einer Vorortmischung. Zudem wird durch das Ausbringen aus den erfindungsgemäß einzusetzenden Gebinden eine sehr hohe Homogenität des Wegedeckenmaterials sichergestellt, sodass es eben nicht zu lokalen Fehlstellen aufgrund des Nicht-Einhaltens der vorgeschriebenen Sieblinie in den fertigen Wegedecken kommt.

Bevorzugt ist ein erfindungsgemäßes Verfahren, wobei die Gesteinskörnung getrocknet, insbesondere feuergetrocknet ist. Unter "feuergetrocknet" im Sinne der Erfindung ist zu verstehen, dass Luft mit einem Öl- oder Gasbrenner auf 450 °C erhitzt wird. Mit dieser Heißluft wird in Trocknungsöfen die Feuchte der Gesteinskörnung bis auf einen Wassergehalt von weniger als 0,2 % reduziert. Während der Trocknung werden die heißluftgetrockneten Körnungen weitgehend keimfrei. Getrocknete Gesteinskörnungen können viel exakter und engstufiger klassiert werden als feuchte Körnungen und haben daher ein viel breiteres Spektrum der Verwendungsmöglichkeit.

Durch Feuertrocknung wird ausreichende Keimfreiheit gewährleistet, wie es auch generell bevorzugt ist, dass die zu mischenden Komponenten, insbesondere die Gesteinskörnung mit einem keimvermindernden Verfahren behandelt werden.

Die vorgetrockneten Gesteinskörnungen können in einem Zuschlagssilo gelagert werden oder direkt vor der Mischung vorgetrocknet werden. Sofern sie in einem Zuschlagsilo gelagert werden, können sie dann zum Beispiel mittels Schneckenförderers über eine Bandwaage abgewogen werden. Parallel dazu kann aus einem weiteren Zuschlagsstoffsilo das Bindemittel Psyllium ebenfalls über eine Bandwaage zu der Gesteinskörnung in einen Mischer, bevorzugt einen geschlossenen Zwangsmischer, zudosiert werden.

Dementsprechend ist es bevorzugt, dass die Gesteinskörnung frei von Wasser ist, wenn sie in den Mischprozess eingesetzt wird. Das Gleiche gilt selbstverständlich für das einzusetzende Psylliumpulver.

In dem Mischer werden nach der Befüllung entsprechend der Rezeptvorgabe (Anteil Psylliumpulver, Gesteinskörnung in der definierten Sieblinie) die genau definierten Mengen Gesteinskörnung und Psyllium homogen, verlustfrei und staubfrei vermischt.

Eine bevorzugte Laufzeit eines Standardzwangsmischers beträgt 60 bis 120 Sekunden, bevorzugt etwa 90 Sekunden und/oder der Mischerinhalt beträgt bei einer bevorzugten Ausgestaltung des Verfahrens eine Tonne bis zehn Tonnen, bevorzugt zwei bis sieben Tonnen und besonders bevorzugt etwa drei Tonnen.

Ergebnis ist eine homogene Zwangsmischung mit optimaler Sieblinie für die Wegedeckenmischung, die auch mit der erforderlichen Menge an Psyllium versehen ist.

Auch andere Mischergrößen und Ausstattung sind denkbar, der Fachmann wird die Mischlaufzeit und die Mischbedingungen entsprechend anpassen.

Im Sinne der Erfindung ist es, dass das fertiggemischte Produkt (Wegedeckenmaterial mit Psyllium) möglichst schnell, bevorzugt unmittelbar (das heißt innerhalb von 15 Minuten, bevorzugt innerhalb von 10 Minuten) nach der Vermischung in die genannten Gebinde gefüllt wird. Ein geeignetes Mittel hierfür kann zum Beispiel ein Rotorpacker sein. Diese Gebinde können als fertige Verpackungseinheit in den Verkehr gebracht werden. Es handelt sich hierbei bevorzugt um eine reine Trockenmischung ohne Feuchte. Durch die Verpackung in Kleingebinde wird - wie bereits oben angedeutet - überraschenderweise die Entmischung der fertigen Ware ausreichend ausgeschlossen und der Bindemittelanteil gesichert. Das so hergestellte Wegedeckentrockenmischungsmaterial ist nicht nur anwenderfreundlich, sondern auch bei trockener Lagerung unbegrenzt lagerfähig. Auch ein Teil der Feinstbestandteile der Gesteinskörnung ist so sichergestellt.

Bevorzugt ist ein erfindungsgemäßes Verfahren, wobei die Mischung 0,1 - 2 Gew.-% bevorzugt 0,3 - 0,8 Gew.-% weiter bevorzugt 0,5 - 0,7 Gew.-% Psylliumpulver umfasst.

Ferner ist es bevorzugt, dass das Psyllium in einer Mahlfeinheit von 40 bis 200 mesh eingesetzt wird. Diese Psylliummengen beziehungsweise -mahlfeinheit sind besonders geeignet für Wegedeckenmaterial.

Besonders bevorzugt ist ein erfindungsgemäßes Verfahren, wobei die Sieblinie der Gesteinskörnung wie folgt definiert ist:

| | | | | | | | | | | |
|---|---|---|---|---|---|---|---|---|---|---|
| Durchgang in Gew.- % durch die Siebe mm | 0,06 | 0,16 | 0,31 | 0,63 | 1,25 | 2,50 | 5,00 | 10,00 | 20,00 | 40,00 |
| mindestens | 15,0 | 22,0 | 28,0 | 38,0 | 51,0 | 67,0 | 90,0 | 100,0 | 100,0 | 100,0 |
| maximal | 20,0 | 28,0 | 36,0 | 50,0 | 65,0 | 85,0 | 93,0 | 99,0 | 100,0 | 100,0 |

Im Sinne der Erfindung ist es auch möglich, dass die in der genannten Tabelle beschriebenen Einzelfraktionen für alternative bevorzugte Sollsieblinien jeweils um 5 Gewichtsprozent des Mindest- beziehungsweise des Maximalwertes nach unten beziehungsweise nach oben abweichen. Dies gilt allerdings nicht für den Anteil, die dem Siebdurchgang 40 Millimeter entsprechen. Selbstverständlich kann der Maximalgewichts-Prozentwert bei den genannten Varianten maximal 100 sein.

Erfindungsgemäß bevorzugt ist ein Verfahren, wobei die Mischung nach Abfüllung in die Gebinde einen Feuchtegehalt von ≤ 0,5 Gew-%, bevorzugt ≤ 0,1 Gew-% und weiter bevorzugt ≤ 0,05 Gew-% besitzt.

Mit dem Feuchtegehalt ist sämtliche Flüssigkeit gemeint, die bei Trocknungstemperaturen von 150°C aus der erfindungsgemäß hergestellten Mischung entfernt werden kann. Bevorzugt ist selbstverständlich, dass der Feuchtegehalt 0 Gew.-% ist.

Weiterhin ist erfindungsgemäß bevorzugt ein Verfahren, wobei die Mischung nach Abfüllung in die Gebinde zu ≥ 99 Gew.-% aus Psyllium und Gesteinskörnung besteht.

Teil der Erfindung ist auch die Verwendung von Gebinden mit einem Inhalt von ≤ 75 kg, bevorzugt ≤ 50 kg, weiter bevorzugt ≤ 40 kg, besonders bevorzugt ≤ 30 kg zur Sicherstellung einer Sieblinie eines psylliumhaltigen Wegedeckenmaterials.

Durch die Verwendung entsprechender Gebinde ist der gewünschte Effekt der Erfindung, nämlich die Sicherstellung der Sieblinie in überraschend guter Weise möglich.

Teil der Erfindung ist ferner, ein gefülltes Gebinde, hergestellt oder herstellbar mittels eines erfindungsgemäßen Verfahrens.

Neben den genannten Gebindegrößen haben sich Gebinde mit einem Füllgewicht von 25 kg in der Praxis als besonders gut handhabbar herausgestellt. Dementsprechend sind erfindungsgemäß Gebinde mit einem Füllgewicht von ≤ 25 kg am meisten bevorzugt.

### Beispiele:

### Beispiel 1

Die Einhaltung der geforderten Vorgaben einer Soll-Sieblinie, wie sie oben in der Tabelle angegeben ist, wurde für die Wegedeckenproduktion mit psylliumhaltigem Wegedeckenmaterial an Lieferungen von Gesteinskörnungen von Halden per LKW als lose Schüttung und an einer Lieferung in einem Big Bag untersucht. Zum Vergleich wurde die Sieblinie einer Mischung aus einem 25 kg - Gebinde (Sack) gemäß der Erfindung untersucht. In der Tabelle 1 werden die Ergebnisse der Sieblinien gegenübergestellt.

**Tabelle 1**

| | | | Durchgang in Gew.-% durch die Siebe mm | | | | | | | | | |
|---|---|---|---|---|---|---|---|---|---|---|---|---|
| Probe Nr. | Bestandteil | Datum | 0,06 | 0,16 | 0,31 | 0,63 | 1,25 | 2,50 | 5,00 | 10,00 | 20,00 | 40,00 |
| - | Wegedecke - min. | | 15,0 | 22,0 | 28,0 | 38,0 | 51,0 | 67,0 | 90,0 | 100,0 | 100,0 | 100,0 |
| - | Wegedecke - max. | | 20,0 | 28,0 | 36,0 | 50,0 | 65,0 | 85,0 | 93,0 | 99,0 | 100,0 | 100,0 |
| 1 | Probe Halde | 04.08.2015 | 5,9 | 28,0 | 42,0 | 48,6 | 64,4 | 72,0 | 88,2 | 96,5 | 100,0 | 100,0 |
| 2 | Probe Big Bag | 04.08.2015 | 23,0 | 31,4 | 46,0 | 53,0 | 57,6 | 63,0 | 84,5 | 98,6 | 100,0 | 100,0 |
| 3 | Probe 25 kg Sack | 04.08.2015 | 17,0 | 24,0 | 32,0 | 39,0 | 54,0 | 71,0 | 85,0 | 100,0 | 100,0 | 100,0 |

Weitere Proben ergaben, dass nur bei Proben aus dem 25 kg-Sack, der mit dem erfindungsgemäßen Verfahren hergestellt wurde, die Sieblinie stets eingehalten wurde.

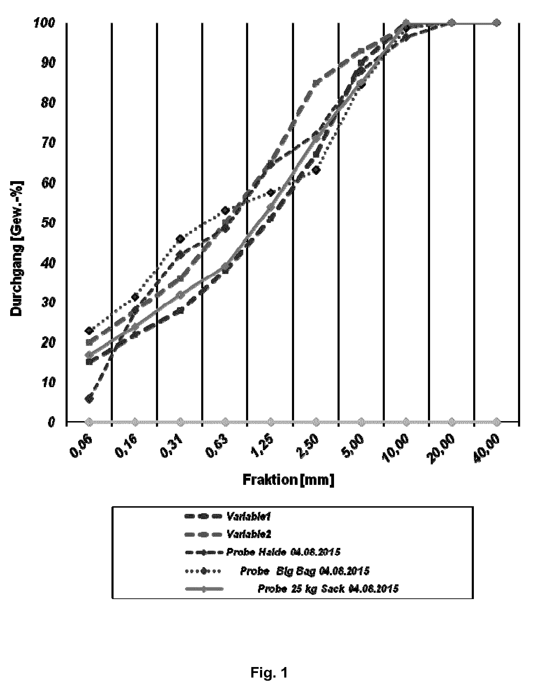

Figur 1 stellt die Ergebnisse grafisch dar, wobei Variable 1 und Variable 2 die Oberbeziehungsweise Untergrenze der jeweiligen Sieblienienfraktionen darstellen.

### Die Ergebnisse sind der Figur 1 entnehmbar.

Aus der Figur 1 kann man deutlich entnehmen, dass nur die erfindungsgemäß hergestellte Wegedeckenmischung die Vorgaben der Sieblinie vollständig erfüllt.

Dabei war das erfindungsgemäße Gebinde durch Mischung von 0,6 Gew.-% Psylliumpulver (Psyllium Husk Powder 85% Reinheit, Hersteller Keyur Industries, Sidhpur, Indien) und dem Rest feuergetrockneter Gesteinskörnung aus Quarzsand (50 Gew.-%), Quarzkies (40 Gew.-%) und Kalksteinsand (10 Gew.-%) gemäß der oben beschriebenen Sieblinie in einem Zwangsmischer (drei Tonnen) für 90 Sekunden und unmittelbar nachfolgendes Abfüllen in das Gebinde hergestellt worden.

### Beispiel 2

Auch Untersuchungen mittels Rasterelektronenmikroskop (REM) ergaben, dass eine Mischung für Wegedecken, hergestellt gemäß dem erfindungsgemäßen Verfahren, eine deutlich homogenere Struktur (optisch) besitzt, als eine mittels offenen Trommelmischers gemäß dem Stand der Technik hergestellte Mischung aus Gesteinskörnung Psyllium, wobei die Vorgaben zur Sieblinie wie oben waren.

## Patentansprüche

1. Verfahren zur Sicherstellung einer Sieblinie eines psylliumhaltigen Wegedeckenmaterials, umfassend die Schritte:
a) Bereitstellen einer Gesteinskörnung mit definierter Sieblinie,
b) Bereitstellen von Psylliumpulver,
c) Vermischen der Gesteinskörnung mit dem Psylliumpulver, so dass eine homogene Mischung entsteht, und
d) Abfüllen der homogenen Mischung in Gebinde mit einem Inhalt von ≤ 75 kg, bevorzugt ≤ 50 kg, weiter bevorzugt ≤ 40 kg, besonders bevorzugt ≤ 30 kg.

2. Verfahren nach Anspruch 1, wobei die Gesteinskörnung feuergetrocknet ist.

3. Verfahren nach Anspruch 1 oder 2, wobei die Gesteinskörnung frei von Wasser ist.

4. Verfahren nach einem der vorangehenden Ansprüche, wobei die Mischung 0,1 bis 2 Gew-% Psylliumpulver umfasst.

5. Verfahren nach einem der vorangehenden Ansprüche, wobei das Psyllium in einer Mahlfeinheit von 40 - 200 mesh eingesetzt wird.

6. Verfahren nach einem der vorangehenden Ansprüche, wobei die Sieblinie der Gesteinskörnung wie folgt definiert ist:
| | | | | | | | | | | |
|---|---|---|---|---|---|---|---|---|---|---|
| Durchgang in Gew.- % durch die Siebe mm | 0,06 | 0,16 | 0,31 | 0,63 | 1,25 | 2,50 | 5,00 | 10,00 | 20,00 | 40,00 |
| mindestens | 15,0 | 22,0 | 28,0 | 38,0 | 51,0 | 67,0 | 90,0 | 100,0 | 100,0 | 100,0 |
| maximal | 20,0 | 28,0 | 36,0 | 50,0 | 65,0 | 85,0 | 93,0 | 99,0 | 100,0 | 100,0 |

7. Verfahren nach einem der vorangehenden Ansprüche, wobei die Mischung nach Abfüllung in die Gebinde einen Feuchtegehalt von ≤ 0,5 Gew-%, bevorzugt ≤ 0,1 Gew-% und weiter bevorzugt ≤ 0,05 Gew-% besitzt.

8. Verfahren nach einem der vorangehenden Ansprüche, wobei die Mischung nach Abfüllung in die Gebinde zu ≥ 99 Gew-Prozent aus Psyllium und Gesteinskörnung besteht.

9. Verwendung von Gebinden mit einem Inhalt von ≤ 75 kg, bevorzugt ≤ 50 kg, weiter bevorzugt ≤ 40 kg, besonders bevorzugt ≤ 30 kg zur Sicherstellung einer Sieblinie eines psylliumhaltigen Wegedeckenmaterials.

10. Gefülltes Gebinde, hergestellt oder herstellbar nach einem der Ansprüche 1 bis 8.
